(19) Europäisches Patentamt
European Patent Office
Office européen des brevets

(11) **EP 0 931 812 A1**

(12) **EUROPÄISCHE PATENTANMELDUNG**

(43) Veröffentlichungstag:
28.07.1999 Patentblatt 1999/30

(51) Int. Cl.$^6$: **C08K 9/04**, C08L 21/00

(21) Anmeldenummer: 99100401.1

(22) Anmeldetag: 09.01.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **24.01.1998 DE 19802698**

(71) Anmelder:
**Bayer Aktiengesellschaft
51368 Leverkusen (DE)**

(72) Erfinder: **Scholl, Thomas Dr.
51469 Bergisch Gladbach (DE)**

(54) **Verfahren zur Herstellung von hydrophobierten oxidischen oder silikatischen Füllstoffen enthaltenden Kautschukmischungen sowie deren Verwendung zur Herstellung von Reifen**

(57) Kautschukmischungen, bestehend aus mindestens einem Kautschuk sowie aus mindestens einem hydrophobierten oxidischen oder silikatischen Füllstoff, werden hergestellt, indem man den eingesetzten Füllstoff der <3 Gew.-% an physikalisch gebundenem Wasser enthält, mit 1 bis 100 Gew.-Teilen eines Weichmachers, bezogen auf 100 Gew.-Teile Füllstoff, behandelt und den so behandelten Füllstoff in üblicher Weise mit dem eingesetzten Kautschuk mischt.

**Beschreibung**

Die vorliegende Erfindung betrifft ein Verfahren zur Herstellung von Kautschkmischungen bestehend aus mindestens einem Kautschuk sowie mindestens einem hydrophobierten oxidischen oder silikatischen Füllstoff Desweiteren betrifft die vorliegende Erfindung die Verwendung der nach dem erfindungsgemäßen Verfahren hergestellten Kautschkmischungen zur Herstellung von Reifen, die einen niedrigen Rollwiderstand und einen hohen Abriebwiderstand aufweisen.

Der Einsatz von oxidischen oder silikatischen Füllstoffen, die gegebenenfalls durch entsprechende Oberflächenbehandlung modifiziert wurden, in Reifenkautschuken ist bekannt. Die Modifizierung der eingesetzten oxidischen oder silikatischen Füllstoffe, beispielsweise mit polysulfidischen Silylethern, insbesondere Bis-(triethoxisilyl-propyl)-tetrasulfid, dient insbesondere zur Verbesserung des Verarbeitungsverhaltens der eingesetzten silikatischen oder oxidischen Füllstoffe und der Verbesserung der Füllstoff/Matrix-Ankopplung in gefüllten Kautschuksystemen (siehe z.B. US-PS 4 514 231 und 4 704 414 sowie DE 2 141 159 und 2 255 577). Nachteilig bei der Verwendung von polysulfidischen Silylethern zur Oberflächenmodifizierung der oxidischen oder silikatischen Füllstoffe sind das aufwendige Herstellungsverfahren und die hohen Rohstoffkosten der polysulfidischen Silylether. Auch andere, schwefelfreie Silane sind zur Oberflächenbehandlung von Füllstoffen verwendet worden, insbesondere zur Hydrophobierung der Füllstoffe. Diese Silane bilden jedoch eine feste chemische Bindung mit der Kieselsäureoberfläche und wirken sich daher nachteilig beim Einsatz in Kautschukartikeln aus. Es war daher ein Ziel der vorliegenden Erfindung, die Wirksamkeit der teuren polysulfidischen Silylether-Füllstoffaktivatoren mit kostengünstigen Zusatzstoffen zu verbessern, so daß entweder Vorteile in Verarbeitung und Endeigenschaften resultieren und/oder die Dosierung an teurem polysulfidischem Silylether ohne Endeigenschaftseinbußen zurückgenommen werden kann.

Als kostengünstige Zusatzstoffe werden u.a. Weichmacher, insbesondere Mineralölweichmacher, zur Verbesserung des Verarbeitungsverhaltens von Kautschkmischungen und der Endeigenschaften von Kautschukvulkanisaten verwendet. Verwiesen wird in diesem Zusammenhang auf die Verwendung von aromatischen Weichmachern in Kieselsäure-gefüllten Reifenlaufflächen (siehe hierzu US 5 227 425 und EP 732 362). Gemäß dem bekannten Stand der Technik wird die Mischung von Kautschuk, Füllstoff und Weichmacher in der Weise durchgeführt, daß man den eingesetzten Kautschuk, den eingesetzten oxidischen oder silikatischen Füllstoff wie Kieselsäure, und den Weichmacher getrennt einem Innenmischer zuführt und bei erhöhter Temperatur mischt. Mineralöl/Kieselsäure-Mischungen mit verbessertem Staubverhalten beschreibt GB 2 308 588. Ein Einfluß des Behandlungsprozesses und des Wassergehalts auf das Naßrutschfestigkeits-/Rollwiderstands-Verhalten von Reifen wurde nicht festgestellt. Bei den eingesetzten Kieselsäuren handelt es sich um handelsübliche, gefällte Kieselsäuren, die ca. 5 bis 6 Gew.-% an physikalisch gebundenem Wasser enthalten.

Es wurde nun gefunden, daß durch das erfindungsgemäße Verfahren Kautschkmischungen, die einen hydrophobierten oxidischen oder silikatischen Füllstoff enthalten, hergestellt werden können, welche aufgrund der besonderen Herstellungsweise zu einer verbesserten Verarbeitbarkeit der Kautschkmischungen führen, verbunden mit einem günstigeren Vulkanisationsverhalten sowie verbesserten mechanischen und dynamischen Eigenschaften, die sich im verbesserten Abriebverhalten und günstigerem Naßrutschfestigkeit-/Rollwiderstandsverhalten wiederspiegeln.

Gegenstand der vorliegenden Erfindung ist daher ein Verfahren zur Herstellung von Kautschkmischungen, bestehend aus mindestens einem Kautschuk sowie aus 5 bis 300 Gew.-Teilen mindestens eines hydrophobierten oxidischen oder silikatischen Füllstoffs, bezogen auf 100 Gew.-Teile des jeweils eingesetzten Kautschuks, das dadurch gekennzeichnet ist, daß man den eingesetzten Füllstoff der ≤ 3 Gew.-% an physikalisch gebundenem Wasser enthält, mit 1 bis 100 Gew.-Teilen eines Weichmachers, bezogen auf 100 Gew.-Teile Füllstoft, behandelt und den so behandelten Füllstoff in üblicher Weise mit dem eingesetzten Kautschuk mischt.

Als Weichmacher, die für die erfindungsgemäße Behandlung der Füllstoffe geeignet sind, kommen grundsätzlich alle bekannten Weichmacher in Betracht, insbesondere Weichmacher auf Mineralölbasis, synthetische Weichmacher oder ein als Weichmacher bekanntes natürliches Fett oder Öl. Bevorzugt eignen sich Mineralölweichmacher, Aryloder Alkylphosphate oder ungesättigte pflanzliche Öle.

Unter Mineralölweichmachern sind parafinische, naphthenische oder aromatische Mineralöle zu verstehen mit VDK-Zahlen (Viskositäts-Dichte-Konstanten) von 0,791 bis 1,050, vorzugsweise 0,85 bis 1,0, und Refraktionsinterzepten $R_j$ von ca. 1,04 bis 1,07. Derartige Mineralölweichmacher werden beispielsweise in Ullmann, Verlag Chemie, Weinheim, Band 13, 1976, Seite 654 bis 658 beschrieben, und sind im Handel erhältlich.

Unter synthetischen Weichmachern sind zu verstehen Esterweichmacher, wie Phthalsäureester, Adipinsäureester, Sebacinsäureester, Phosphorsäureester, Weichmacher auf Ether- und Thioetherbasis, Polyether- und Polyetherthioetherweichmacher, Alkylarylsulfonsäureester und gesättigte oder ungesättigte Kohlenwasserstoffe mit Molekulargewichten von 250 bis 5.000, besonders bevorzugt solche mit einem Gehalt an zusätzlichen Hydroxylgruppen von 0,5-7 Gew.-%. Beispiele hierfür sind. Dibutylphthalat, Dioctylphthalat, Dioctylsebacat, sowie Polyester auf Basis Adipinsäure und/oder Sebazinsäure mit Propylenglykol, Butandiol und/oder Hexandiol, Trioctylphosphat, Triphenylphosphat, Trikresylphosphat, Diphenylphosphat, Diphenylkresylphosphat, Dibenzylether, Methylen-bis-thioglykolsäurebutylester, Paraffinsulfonsäurephenylester sowie Oleylalkohol, Dimerfettsäurediol und hydroxylgruppenhaltiges, flüssiges Polybutadien.

Unter natürlichen Fetten oder Ölen sind pflanzliche und tierische Fette oder Öle zu verstehen, sowie deren Umesterungs-, Isomerisierungs-, Oligomerisierungs-, Dehydratisierungs-, Oxidations-, Epoxidations-, Sulfatierungs- und Hydrierungsprodukte. Dies sind z.B. Ricinusöl, Baumwollsaatöl, Erdnußöl, Olivenöl, Rüböl, Sesamöl, Sonnenblumenöl, Sojaöl, Weizenkeimöl, Kokosfett, Palmkernfett, Palmöl, Reisöl, Butterfett, Rindertalg, Schmalz, Sardinenöl sowie deren Umesterungs-, Isomerisierungs-, Oligomerisierungs-, Dehydratisierungs-, Oxidations-, Epoxidations-, Sulfatierungs- und Hydrierungsprodukte. Derartige Fette und Öle sowie deren Gewinnung, Reinigung und chemische Modifizierung sind in Ullmann, Verlag Chemie, Weinheim 1976, Seiten 457 bis 524 beschrieben.

Ganz besonders bevorzugt werden aromatische Mineralöle, Trialkylphosphate und gesättigte oder ungesättigte hydroxygruppenhaltige Öle pflanzlicher Herkunft eingesetzt. Genannt wird hier insbesondere Rizinusöl, und seine Hydrierungs-, Isomerisierungs-, Dehydratisierungs-, Umesterungs-, Sulfatierungs- und Oligomerisierungsprodukte.

Die Weichmacher werden bevorzugt in Mengen von 1 bis 50 Gew.-Teilen, bezogen auf 100 Gew.-Teile Füllstoff eingesetzt.

Die Weichmacher können gegebenenfalls bis zu 30 Gew.-% weitere Polymere in gelöster Form enthalten, insbesondere Dienkautschuk, wie NR, IR, SBR, BR, IIR oder NBR-Kautschuk.

Als oxidische oder silikatische Füllstoffe können in das erfindungsgemäße Verfahren die bekannten natürlichen oder synthetischen Füllstoffe eingesetzt werden, besonders bevorzugt sind Fällungskieselsäuren und/oder -Silikate

wie

- Kieselsäuren, hergestellt durch Fällung von Lösungen von Silikaten mit spez. Oberflächen von 5 bis 1 000, vorzugsweise 20 bis 400 m$^2$/g (BET-Oberfläche) und mit Primärteilchengrößen von 10 bis 400 nm. Die Kieselsäuren können gegebenenfalls auch als Mischoxide mit anderen Metalloxiden wie Aluminium, Magnesium, Kalzium, Barium, Zink, Zirkonium, Titanoxiden vorliegen;

- Silikate, z.B. Aluminiumsilikat, Erdalkalisilikate, wie Magnesiumsilikat oder Kalziumsilikat, mit BET-Oberflächen von 20 bis 400 m$^2$/g und Primärteilchendurchmesser von 10 bis 400 nm.

Derartige oxidische oder silikatische Füllstoffe sind beispielsweise näher beschrieben in J. Franta, Elastomers and Rubber Compounding Materials, Elsevier 1989, Seiten 401-447.

Für das erfindungsgemäße Verfahren ist es von Bedeutung, daß der mit den Weichmachern behandelte Füllstoff einen Mindestanteil an physikalisch gebundenem Wasser nicht überschreitet. Deshalb geht man bei dem erfindungsgemäßen Verfahren so vor, daß man einen Füllstoff einsetzt, der einen Gehalt an physikalisch gebundenem Wasser von ≤ 3 Gew.-%, bevorzugt ≤ 2 Gew.-%, insbesondere ≤ 1 Gew.-%, bezogen auf den eingesetzten Füllstoff nicht überschreitet. Daher ist es günstig, daß man den einzusetzenden oxidischen oder silikatischen Füllstoff, der üblicherweise einen Wassergehalt von 5 bis 6 Gew.-% aufweist, einem Trocknungsprozess unterwirft. Der Trocknungsvorgang kann in bekannten Trocknungsaggregaten, wie Band-Trockner, Drehrohrofen, Spin-Flash-Trockner oder Sprühtrockner bei Temperaturen erfolgen, die für die gewünschten Trocknungsgrade ausreichen. Die Trocknungszeiten können wenige Minuten bis zu mehreren Stunden betragen. Unter physikalisch gebundenem Wasser wird in diesem Zusammenhang der Trockenverlust des Füllstoffs bei einer Temperatur von 105°C gemäß DIN 787/2 verstanden.

Die Trocknung kann auch in einem Lösungsmittel, wie in einem gesättigten, ungesättigten oder aromatischen Kohlenwasserstoff, gegebenenfalls in Gegenwart des Weichmachers erfolgen. Geeignete Lösungsmittel sind z.B. Cyclohexan und Toluol.

In einer besonders bevorzugten Variante des erfindungsgemäßen Verfahrens wird der handelsübliche Füllstoff mit einem Wassergehalt von ca. 5 bis 6 Gew.-% oder der Füllstoff als feuchter Filterkuchen (Wassergehalt: ca. 50 bis 90 Gew.-%) mit dem Weichmacher, gegebenenfalls in Form einer wäßrigen Emulsion oder als Lösung in organischen Lösungsmittel, gemischt und anschließend die Mischung auf Temperaturen erhitzt, damit der geforderte Gehalt an physikalisch gebundenem Wasser nicht überschritten wird. Die Trocknung geschieht dabei bei Temperaturen von etwa 50 bis 250°C, insbesondere bei einer bis 220°C.

Darüber hinaus können zur weiteren Modifizierung die bekannten Hydrophobierungsmittel, insbesondere polysulfidische Silylether, wie Bis-(triethoxysilylpropyl)tetrasulfid, Polydimethylsiloxane, die gegebenenfalls weitere Si-OH-Gruppen tragen, Octamethylcyclotetrasiloxan, Hexamethyldisilazan, Vinylsilane, wie Triethoxyvinylsilan, Alkylsilane, wie Octyltriethoxysilan und Octadecyltriethoxysilan, Aminosilan, wie 3-Aminopropyltriethoxysilan, zugesetzt werden.

Die erfindungsgemäß mit den Weichmachern behandelten Füllstoffe werden gegenüber den einfachen physikalischen Mischungen von Wasser nicht oder zumindest zeitlich verzögert benetzt und besitzen Methanolbenetzbarkeiten von 0 bis 50 %, bevorzugt 5 bis 40 %. Die Methanolbenetzbarkeit gibt hierbei den Gew.-Anteil von Methanol in einem Methanol/Wasser-Gemisch an, der gerade in der Lage ist, den Füllstoff zu benetzen. Die Bestimmung der Methanolbenetzbarkeit wird wie folgt ausgeführt:

200 mg der Kieselsäure und 50 ml Wasser werden in einen 250 ml Rundkolben mit Magnetrührer gegeben. Die (teil-) hydrophobierte Kieselsäure bleibt an der Wasseroberfläche. Anschließend taucht man die Spitze einer mit Methanol gefüllten Meßpipette in die flüssige Phase (um einen direkten Kontakt mit der Kieselsäure zu vermeiden) und läßt das Methanol langsam zufließen. Dabei wird mit dem Magnetrührer gerührt, so daß in der Flüssigkeit ein Wirbel entsteht. Es wird solange Methanol zugegeben, bis die Festsubstanz benetzt ist. Dies ist der Fall, wenn die Kieselsäure nicht mehr über die Oberfläche der flüssigen (bereits Methanol enthaltenden) Phase verteilt ist und die relativ klare filmfreie Flüssigkeit sichtbar wird.

Auswertung: Die Angabe der Methanolbenetzbarkeit erfolgt in Gew.-% Methanol der Methanol/Wasser-Mischung nach der Formel

$$\text{Methanolbenetzbarkeit (in Gew.-\%)} = (0,79 \times \text{Anzahl ml MeOH} / 0,79 \times \text{Anzahl ml MeOH} + 50) \times 100$$

Nach dem erfindungsgemäßen Verfahren wird der mit dem Weichmacher behandelte oxidische oder silikatische Füllstoff in üblicher Weise mit den einzusetzenden Kautschuken vermischt.

Als Kautschuke können in das erfindungsgemäße Verfahren neben Naturkautschuk auch die bekannten Synthesekautschuke eingesetzt werden. Bevorzugte Synthesekautschuke sind beispielsweise bei W. Hofmann, Kautschuktechnologie, Gentner Verlag, Stuttgart 1980, beschrieben. Sie umfassen u.a.

BR - Polybutadien
ABR - Butadien/Acrylsäure-$C_{1-4}$-alkylester-Copolymere
CR - Polychloropren
IR - Polyisopren
SBR - Styrol/Butadien-Copolymerisate mit Styrolgehalten von 1 bis 60, vorzugsweise 20 bis 50 Gew.-%
IIR - Isobutylen/Isopren-Copolymerisate
NBR - Butadien/Acrylnitril-Copolymere mit Acrylnitrilgehalten von 5 bis 60, vorzugsweise 10 bis 40 Gew.-%
HNBR - teilhydrierter oder vollständig hydrierter NBR-Kautschuk
EPDM - Ethylen/Propylen/Dien-Copolymerisate

sowie Mischungen dieser Kautschuke.

Für die Herstellung von Kfz-Reifen mit Hilfe der oberflächenmodifizierten Füllstoffe sind insbesondere Naturkautschuk, Emulsions-SBR sowie Lösungs-SBR-Kautschuke mit einer Glastemperatur oberhalb von -50°C, die gegebenenfalls mit Silylethern oder anderen funktionellen Gruppen, modifiziert sein können, wie z.B. in der EP-A 447 066 beschrieben, Polybutadienkautschuke mit hohem 1,4-cis-Gehalt (>90 %), die mit Katalysatoren auf Basis Ni, Co, Ti oder Nd hergestellt werden, sowie Polybutadienkautschuke mit einem Vinylgehalt von 0 bis 75 % sowie deren Mischungen von Interesse. Ganz besonders bevorzugt werden Lösungs-SBR-Kautschuke mit einem Vinylgehalt von 20 bis 60 Gew.-% sowie Polybutadienkautschuke mit hohem 1,4-cis-Gehalt (>90 %) eingesetzt.

Die erfindungsgemäßen Kautschukmischungen enthalten die hydrophobierten oxidischen oder silikatischen Füllstoffe bevorzugt in Mengen von 5 bis 150 Gew.-Teilen, bezogen auf 100 Gew.-Teile des jeweils eingesetzten Kautschuks.

Neben den erfindungsgemäßen hydrophobierten oxidischen oder silikatischen Füllstoffen können die Kautschukmischungen weitere Füllstoffe enthalten. Dies sind neben unbehandelten oxidischen oder silikatischen Füllstoffen auch Ruße. Bevorzugte weitere Füllstoffe sind:

- hochdisperse Kieselsäuren, hergestellt z.B. durch Fällung von Lösungen von Silikaten oder Flammenhydrolyse von Siliciumhalogeniden mit spezifischen Oberflächen von 5 bis 1 000, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn-, Zr-, Ti-oxiden vorliegen;
- synthetische Silikate, wie Aluminiumsilikat, Erdalkalisilikat wie Magnesiumsilikat oder Calciumsilikat, mit BET-Oberflächen von 20 bis 400 m²/g und Primärteilchendurchmessern von 10 bis 400 nm;
- natürliche Silikate, wie Kaolin und andere natürlich vorkommende Kieselsäure;
- Glasfasern und Glasfaserprodukte (Matten, Stränge) oder Mikroglaskugeln;
- Metalloxide, wie Zinkoxid, Calciumoxid, Magnesiumoxid, Aluminiumoxid;
- Metallcarbonate, wie Magnesiumcarbonat, Calciumcarbonat, Zinkcarbonat;
- Metallhydroxide, wie z.B. Aluminiumhydroxid, Magnesiumhydroxid;
- Ruße; die hierbei zu versendenden Russe sind nach dem Flammruß, Furnace- oder Gasrußverfahren hergestellt und besitzen BET-Oberflächen von 20 bis 200 m²/g, wie z.B. SAF-, ISAF-, HAF-, FEF- oder GPF-Ruße.

Besonders bevorzugt werden hochdisperse gefällte Kieselsäuren und Russe eingesetzt. Die genannten Füllstoffe können alleine oder im Gemisch eingesetzt werden.

Die erfindungsgemäßen Kautschukmischungen können selbstverständlich noch weitere Kautschukhilfsprodukte enthalten, wie Reaktionsbeschleuniger, Alterungsschutzmittel, Wärmestabilisatoren, Lichtschutzmittel, Ozonschutzmittel, Verarbeitungshnilfsmittel, Weichmacher, Tackifier, Treibmittel, Farbstoffe, Pigmente, Wachse, Streckmittel, organische Säuren, Verzögerer, Metalloxide sowie Aktivatoren wie Triethanolamin, Polyethylenglykol, Hexantriol, Bis-(triethoxisilylpropyl)tetrasulfid die in der Gummiindustrie bekannt und üblich sind. Die Kautschukhilfsmittel werden in üblichen Mengen zugemischt und richten sich nach dem jeweils beabsichtigten Verwendungszweck. Übliche Mengen sind beispielsweise Mengen von 0,1 bis 50 Gew.-%, bezogen auf die Gesamtmenge des eingesetzten Kautschuks.

Besonders bevorzugte Kautschukmischungen enthalten neben Kautschuk, Füllstoff und weiterer Kautschukhilfsmitteln 0,1 bis 15 Gew.-Teile, bezogen auf 100 Gew.-Teile Kautschuk, schwefelhaltige Silylether als Füllstoffaktivatoren, insbesondere Bis(trialkoxisilyl-alkyl)-polysulfide, wie in DE 2 141 159 und DE-AS 2 255 577 beschrieben, oligomere und/oder polymere schwefelhaltige Silylether der DE-OS 4 435 311 und EP-A 670 347, Mercapatoalkyltrialkoxisilane, insbesondere Mercaptopropyltriethoxisilan, Thiocyanatoalkylsilylether, insbesondere Mercaptopropyltriethoxisilan, Thiocyanatoalkylsilylether, wie z.B. in DE-OS 19 544 469 beschrieben.

Ganz besonders bevorzugt werden Bis-(triethoxisilylpropyl)-tetrasulfid, das entsprechende Disulfid, sowie Polysulfide gemäß EP 670 347, hergestellt aus Chlorpropyltriethoxisilan, Dichloralkanen und Natriumpolysulfid, Oligooder Poly(4-(2-triethoxisilylethyl)cyclohexan-1,2-diyl)-bisoligosulfide der DE 4 435 311 sowie Thiocyanatopropyltriethoxisilan. Die genannten Verbindungen sind auch nach der Hydrophobierung der oxidischen und silikatischen Füllstoffe überraschend gut wirksam.

Neben den zuvor erwähnten Kautschukhilfsprodukten können den erfindungsgemäßen Kautschukmischungen die bekannten Vernetzer zugegeben werden, wie Schwefel, Schwefelspender oder Peroxide. Darüber hinaus können die erfindungsgemäßen Kautschukmischungen Vulkanisationsbeschleuniger enthalten, wie Mercaptobenzthiazole, Mercaptosulfenamide, Guanidine, Thiurame, Dithiocarbamate, Thioharnstoffe und/oder Thiocarbonate. Die Vulkanisationsbeschleuniger und die erwähnten Vernetzer werden üblicherweise in Mengen von 0,1 bis 10 Gew.-%, bevorzugt 0,1 bis 5 Gew.-%, bezogen auf die Gesamtmenge des jeweils eingesetzten Kautschuks, eingesetzt.

Die Vulkanisation der erfindungsgemäßen Kautschukmischungen kann bei üblichen Temperaturen von 100 bis 200°C, bevorzugt 130 bis 180°C (gegebenenfalls unter Druck 10 bis 200 bar), erfolgen.

Die Abmischung der Kautschuke mit den hydrophobierten Füllstoffen und den anderen erwähnten Kautschukhilfsprodukten, Vernetzern und Beschleunigern kann in üblicher Weise mit Hilfe von geeigneten Mischaggregaten, wie Walzen, Innenmischer und Mischextruder, durchgeführt werden.

Die erfindungsgemäßen Kautschukvulkanisate eignen sich zur Herstellung von Formkörpern, z.B. für die Herstellung von Kabelmänteln, Schläuchen, Treibriemen, Förderbändern, Walzenbelägen,Schuhsohlen, Dichtungsringen und Dämpfungselementen. Insbesondere eignen sie sich für die Herstellung von Reifen, da solche Reifen einen besonders niedrigen Rollwiderstand, eine besonders hohe Naßrutschfestigkeit und einen hohen Abriebwiderstand aufweisen.

## Beispiele

### Beispiel 1:
Mit aromatischem Mineralöl erfindungsgemäß behandelte Kieselsäure (37,5:80 Gew.-Teile)

500 g Vulkasil S (hochaktive gefällte Kieselsäure mit BET-Oberfläche 180 $m^2$/g der Bayer AG) und 234,4 g aromatisches Mineralöl Renopal 450 (Fuchs Mineralölwerke) wurden in einem Dreihalskolben mit Rührwerk und Destillationsbrücke 6 Stunden unter Rühren in einem Ölbad auf 220°C erhitzt, wobei ca. 25 g Wasser aodestillierten. Man erhält 709 g eines bräunlichen Pulvers. Die auf diese Weise teilhydrophobierte Kieselsäure wird im Gegensatz zum Ausgangsprodukt von Wasser nicht spontan benetzt, sondern (unter Rühren) erst nach ca. 1 Minute.

### Beispiel 2: Mit Ricinusöl erfindungsgemäß behandelte Kieselsäure (8:80 Gew.-Teile)

Es wurde wie in Beispiel 1 verfahren, wobei man 500 g Vulkasil S (hochaktive gefällte Kieselsäure mit BET-Oberfläche 180 $m^2$/g der Bayer AG) und 50 g Ricinusöl 5 Stunden auf 220°C erhitzte und Wasser aodestillierte. Man erhielt 521 g eines farblosen Pulvers. Methanolbenetzbarkeit: 19 Gew. %.

### Beispiel 3: Mit Olivenöl erfindungsgemäß behandelte Kieselsäure (8:80 Gew.-Teile)

Es wurde wie in Beispiel 1 verfahren, wobei man 500 g Vulkasil S (hochaktive gefällte Kieselsäure mit BET-

Oberfläche 180 m$^2$/g der Bayer AG) und 50 g Olivenöl 4 Stunden auf 220°C erhitzte und Wasser abdestillierte. Man erhielt 520 g eines farblosen Pulvers. Methanolbenetzbarkeit: 11 Gew.-%.

**Beispiel 4: (Vergleichsbeispiel):**

Mit Ricinusöl gemischte Kieselsäure (8:80 Gew.-Teile)

Es wurde wie im Vergleichsbeispiel 1 verfahren, wobei man 500 g Vulkasil S und 50 g Ricinusöl zwei Stunden auf 80°C erhitzte. Man erhielt 549 g eines weißen Pulvers. Methanolbenetzbarkeit: 0 Gew. %. Die auf diese Weise behandelte Kieselsäure wird von Wasser spontan benetzt.

**Beispiel 5: Kautschukmischungen und Vulkanisate**

Die folgenden Kautschukmischungen wurden in einem 1,5 l Kneter bei 130°C hergestellt. Schwefel und Beschleuniger wurden zum Schluß auf einer Walze bei 50°C zugemischt (die Mengenangaben beziehen sich auf Gewichtsteile):

| | Vergleich 5.A Kieselsäure mit 5-6 % phys. gebundenem Wasser | Vergleich 5.B Kieselsäure mit 5-6 % phys. gebundenem Wasser + Mineralöl | Beispiel 5.1 erfindungsge-mäß mit Mineralöl behan-delte Kieselsäure (<3 % $H_2O$) |
|---|---|---|---|
| L-SBR-Kautschuk Buna VSL 4020-0 (Bayer AG) | 75 | 75 | 75 |
| BR-Kautschuk Buna CB 24 (Bayer AG) | 25 | 25 | 25 |
| Kieselsäure Vulkasil S (Bayer AG) | 80 | 0 | 0 |
| aromat. Mineralöl Renopal 450 (Fuchs) | 37,5 | 0 | 0 |
| Gemisch aus 80 phr Vulkasil S und 37,5 phr | | | |
| aromat. Mineralöl Renopal 450 (Fuchs) | 0 | 117,5 | 0 |
| hydrophobierte Kieselsäure gem. Beispiel 1 | 0 | 0 | 117,5 |
| Ruß Corax N 339 (Degussa) | 6,5 | 6,5 | 6.5 |
| Zinkoxid | 2,5 | 2,5 | 2,5 |
| Stearinsäure | 1 | 1 | 1 |
| Antioxidans Vulkanox 4020 (Bayer AG) | 1 | 1 | 1 |
| Ozonschutzwachs Antilux 654 (Rheinchemie) | 1,5 | 1,5 | 1,5 |
| Silan Si 69 | 6,5 | 6,5 | 6,5 |
| Schwefel | 1,5 | 1,5 | 1,5 |
| Beschleuniger Vulkacit CZ (Bayer AG) | 1,5 | 1,5 | 1,5 |
| Beschleuniger Vulkacit D (Bayer AG) | 2 | 2 | 2 |
| Mischungsviskosität ML 1+4 bei 100° C (ME) | 77 | 69 | 64 |
| Vulkanisationsverhalten bei 160° C | | | |
| Monsanto MDR 2000 / 30 Min. | | | |
| Zeit bis 90 % des Drehmomentendwertes (Minuten) | 12,8 | 13,9 | 10,8 |

Die Kautschukmischungen wurden anschließend 35 Minuten bei 160°C vulkanisiert. Es wurden folgende Vulkanisateigenschaften gefunden:

| Bruchdehnung (%) | 440 | 450 | 450 |
|---|---|---|---|
| Spannungswert bei 300 % Dehnung (MPa) | 11,4 | 10,8 | 11,3 |
| Härte bei 23° C (Shore A) | 73 | 72 | 74 |
| Zugfestigkeit (MPa) | 18,7 | 18,4 | 18,2 |
| Rückprallelastizität bei 23°C (%) | 36 | 34 | 33 |
| Rückprallelastizität bei 70°C (%) | 48 | 49 | 54 |
| Differenz zwischen Rückprallelastizität 70/23°C | 12 | 15 | 19 |
| Abrieb DIN 53 516 (ccm) | 95 | 85 | 68 |

Neben dem verbesserten Verarbeitungsverhalten der unvulkanisierten Mischung, das sich in der niedrigeren Mooneyviskosität manifestiert, weisen die erfindungsgemäßen Vulkanisate Vorteile in der dynamischen Dämfung sowohl bei Raumtemperatur als auch bei 70°C auf die gleichzeitig auf verbessertes Naßrutschfestigkeits- und Rollwiderstandsverhalten von Reifen schließen lassen, sowie erhebliche Vorteile im Abriebsverhalten auf.

**Beispiel 6:** Kautschukmischungen und Vulkanisate

Die folgenden Kautschukmischungen wurden in einem 1,5 l Kneter bei 130°C hergestellt. Schwefel und Beschleuniger wurden zum Schluß auf einer Walze bei 50°C zugemischt:

| | Vergleich 6.A Kieselsaure mit 5-6 % phys. gebundenem Wasser | Vergleich 6.B Kieselsaure mit 5-6 % phys. gebundenem Wasser + Ricinusöl | Beispiel 6.1 erfindungsge-mäß mit Ricinusöl behan-delte Kieselsäure (<3 % $H_2O$) |
|---|---|---|---|
| L-SBR-Kautschuk Buna VSL 4020-0 (Bayer AG) | 75 | 75 | 75 |
| BR-Kautschuk Buna CB 24 (Bayer AG) | 25 | 25 | 25 |
| Kieselsäure Vulkasil S (Bayer AG) | 80 | 0 | 0 |
| aromat. Mineralöl Renopal 450 (Fuchs) | 37,5 | 29,5 | 29,5 |
| Gemisch aus 80 phr Vulkasil S und 8 phr | | | |
| Ricinusöl gemäß Beispiel 4 | 0 | 88 | 0 |
| hydrophobierte Kieselsäure gem. Beispiel 2 | 0 | 0 | 88 |
| Ruß Corax N 339 (Degussa) | 6,5 | 6,5 | 6,5 |
| Zinkoxid | 2,5 | 2,5 | 2,5 |
| Stearinsäure | 1 | 1 | 1 |
| Antioxidans Vulkanox 4020 (Bayer AG) | 1 | 1 | 1 |
| Ozonschutzwachs Antilux 654 (Rheinchemie) | 1,5 | 1,5 | 1,5 |
| Silan Si 69 | 6,5 | 6,5 | 6,5 |
| Schwefel | 1,5 | 1,5 | 1,5 |
| Beschleuniger Vulkacit CZ (Bayer AG) | 1,5 | 1,5 | 1,5 |
| Beschleuniger Vulkacit D (Bayer AG) | 2 | 2 | 2 |
| Mischungsviskosität ML 1+4 bei 100°C (ME) | 77 | 72 | 64 |
| Vulkanisationsverhalten bei 160°C | | | |
| Monsanto MDR 2000 / 30 Min. | | | |
| Zeit bis 90 % des Drehmomentendwertes (Minuten) | 12,8 | 14,1 | 14,8 |

Die Kautschukmischungen wurden anschließend 35 Minuten bei 160°C vulkanisiert. Es wurden folgende Vulkanisateigenschaften gefunden:

| Bruchdehnung (%) | 440 | 500 | 450 |
|---|---|---|---|
| Spannungswert bei 300 % Dehnung (MPa) | 11,4 | 9,9 | 11,9 |
| Härte bei 23°C (Shore A) | 73 | 70 | 78 |
| Zugfestigkeit (MPa) | 18,7 | 19,4 | 18,2 |
| Rückprallelastizität bei 23°C (%) | 36 | 35 | 33 |
| Rückprallelastizität bei 70°C (%) | 48 | 49 | 48 |
| Differenz zwischen Rückprallelastizität 70/23°C | 12 | 14 | 15 |
| Abrieb DIN 53 516 (ccm) | 95 | 73 | 63 |

Neben dem verbesserten Verarbeitungsverhalten der unvulkanisierten Mischung, das sich in der niedrigeren Mooneyviskosität manifestiert, weist das erfindungsgemäße Vulkanisat Vorteile in der dynamischen Dämpfung und besonders deutlich im Abriebsverhalten auf. Die einfache physikalische Mischung des Ricinusöls mit Kieselsäure (2. Spalte) führt hingegen zu Verlusten im Verstärkungseffekt, wie aus dem verminderten Spannungswert bei 300 % Dehnung und der geringeren Härte ersichtlich ist.

**Patentansprüche**

1. Verfahren zur Herstellung von Kautschukmischungen, bestehend aus mindestens einem Kautschuk sowie aus 5 bis 300 Gew.-Teilen mindestens eines hydrophobierten oxidischen oder silikatischen Füllstoffs, dadurch gekennzeichnet, daß man den eingesetzten Füllstoff, der ≤ 3 Gew.-% an physikalisch gebundenem Wasser enthält, mit 1 bis 100 Gew.-Teilen eines Weichmachers, bezogen auf 100 Gew.-Teile Füllstoff, behandelt und den so behandelten Füllstoff in üblicher Weise mit dem eingesetzten Kautschuk mischt.

2. Verfahren nach Anspruch 1, dadurch gekennzeichnet, daß man den eingesetzten Füllstoff mit 1 bis 50 Gew.-Teilen eines Weichmachers, bezogen auf 100 Gew.-Teile Füllstoff, behandelt.

3. Verfahren nach Ansprüchen 1 und 2, dadurch gekennzeichnet, daß man als Weichmacher Mineralöle, synthetische Weichmacher oder natürliche ungesättigte Fette oder Öle oder deren Umesterung-, Isomerisierungs-, Oligomerisierungs-, Dehydratisierungs-, Oxidations-, Epoxidations-, Sulfatierungs-, und Hydrierungsprodukte einsetzt.

4. Verfahren nach Ansprüchen 1 bis 3, dadurch gekennzeichnet, daß man als oxidischen oder silikatischen Füllstoff eine Fällungskieselsäure oder ein Fällungsilikat einsetzt.

5. Verfahren nach Ansprüchen 1 bis 4, dadurch gekennzeichnet, daß der mit einem Weichmacher behandelte Füllstoff eine Methanolbenetzbarkeit von 0 bis 50 Gew.-% aufweist.

6. Verfahren nach Ansprüchen 1 bis 5, dadurch gekennzeichnet, daß der mit einem Weichmacher behandelte Füllstoff eine Methanolbenetzbarkeit von 5 bis 40 Gew.-% aufweist.

7. Kautschukmischungen, hergestellt nach dem Verfahren der Ansprüche 1 bis 6, dadurch gekennzeichnet, daß sie neben Füllstoffen und weiteren Kautschukhilfsmitteln 0,1 bis 15 Gew.-Teile schwefelhaltige Silylether, bezogen auf 100 Gew.-Teile Kautschuk, enthalten.

8. Verwendung der nach den Ansprüchen 1 bis 5 hergestellten Kautschukmischungen zur Herstellung von Formkörpern, insbesondere zur Herstellung von Reifen.

EP 0 931 812 A1

## EUROPÄISCHER RECHERCHENBERICHT

**Europäisches Patentamt**

Nummer der Anmeldung

EP 99 10 0401

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 753 549 A (BAYER AG) 15. Januar 1997<br><br>* Zusammenfassung; Ansprüche; Beispiele 6,7 * | 1,2,4,7,8 | C08K9/04<br>C08L21/00 |
| P,X | WO 98 47955 A (SCHOLL THOMAS ;BAYER AG (DE)) 29. Oktober 1998<br>* Zusammenfassung; Ansprüche; Beispiele 1A,8B * | 1-8 | |
| E | EP 0 890 600 A (BAYER AG) 13. Januar 1999<br>* Zusammenfassung; Ansprüche; Beispiele 1,4,6,8 *<br>* Seite 3, Zeile 12 – Zeile 51 * | 1-8 | |
| A | AT 304 866 B (MAGYAROVARI TIMFOELD ES MUEKOR) 15. Dezember 1972<br>* Seite 2, Zeile 38 – Seite 3, Zeile 30; Ansprüche * | 1-8 | |

**RECHERCHIERTE SACHGEBIETE (Int.Cl.6)**

C08K

Der vorliegende Recherchenbericht wurde für alle Patentansprüche erstellt

| Recherchenort | Abschlußdatum der Recherche | Prüfer |
|---|---|---|
| DEN HAAG | 15. April 1999 | Mettler, R-M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 10 0401

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-04-1999

| Im Recherchenbericht angeführtes Patentdokument | Datum der Veröffentlichung | Mitglied(er) der Patentfamilie | Datum der Veröffentlichung |
|---|---|---|---|
| EP 0753549 A | 15-01-1997 | DE 19549034 A<br>CA 2179866 A<br>JP 9012922 A<br>US 5780531 A | 02-01-1997<br>29-12-1997<br>14-01-1997<br>14-07-1998 |
| WO 9847955 A | 29-10-1998 | DE 19717091 A<br>AU 7525298 A | 29-10-1998<br>13-11-1998 |
| EP 0890600 A | 13-01-1999 | DE 19808746 A<br>JP 11035742 A | 21-01-1999<br>09-02-1999 |
| AT 304866 B | 15-12-1972 | DE 1951034 A<br>GB 1290860 A | 16-09-1971<br>27-09-1972 |

EPO FORM P0461

Für nähere Einzelheiten zu diesem Anhang : siehe Amtsblatt des Europäischen Patentamts, Nr.12/82